# EUROPÄISCHE PATENTANMELDUNG

(11) **EP 1 099 908 A2**
(43) Veröffentlichungstag der Anmeldung: **16.05.2001**
(21) Anmeldenummer: 00124192.6
(22) Anmeldetag: 08.11.2000
(51) Int. Cl.: F24D 3/14

(54) **Rohrhalter**

(30) Priorität: 11.11.1999 DE 19954371
(71) Anmelder: gabo Systemtechnik GmbH, 94559 Niederwinkling (DE)
(72) Erfinder: Fellinger, Herbert, 94522 Wallersdorf (DE); Salzberger, Christian, 94428 Eichendorf (DE); Spiessl, Herbert, 94365 Parkstetten (DE)

(57) **Zusammenfassung**

Die Erfindung betrifft einen Rohrhalter für Rohrregister oder dergl. mit integrierter Rohrumlenkung für ein oder mehrere Rohre, die z. B. geradlinig oder spiral- mäander-, kreisförmig oder dergl. verlegt sind und dabei gleichzeitig in ihrer Lage, auch zueinander, fixiert sind, indem sie an Umlenkstellen oder anderen geeigneten Orten in den Rohrhalter von oben eingeschnappt werden.

## Beschreibung

Die Erfindung betrifft einen Rohrhalter gem. dem Oberbegriff des Hauptanspruches.

Rohrhaltesysteme sind vielfältig im Einsatz, insbesondere für die Fixierung von Rohrregistern aus Wärmetauscherrohren für Heiz- und Kühleinrichtungen auf Systemplatten, Beton oder sonstigen Unterlagen. Derartige Einrichtungen sind erforderlich, um das Aufschwimmen, Verrutschen usw. solcher Rohrregister und das Auftreten von Verwerfungen beim Einbetten in Beton, Estrich etc. zu verhindern.

Beispielsweise zeigt die DE 35 13 971 ein Montagegitter für die abstandsgleiche Fixierung von elektrischen Heizdrähten in Klemmhalterungen von Querstegen bzw. bandförmigen Stegen. Eine ähnliche Halteschiene offenbart die CH PS 664 429, wobei Heizrohre einer Fußbodenheizung fixiert werden. Einen gattungsgemäßen Rohrhalter zeigt der Prospekt _{"}Technische Informationen 1999" der Firma gabo Systemtechnik GmbH auf S. 7 rechts oben.

Sämtliche bekannten Rohrhalter weisen bestimmte Nachteile auf. Einer der wesentlichsten Nachteile des Standes der Technik ist, dass Verwerfungen des Rohrregisters und das Aufschwimmen beim Einbetten in Estrich etc. nicht vermieden werden können und dass im Bereich der Umkehrpunkte der Rohrregister die Radien der Rohre nicht exakt den zulässigen Biegeradien des jeweils verwendeten Werkstoffes entsprechen können, es sei denn die Rohrregister werden insgesamt in sogen. Systemplatten mit eingelassenen Kanälen für die Rohre verlegt.

Der Erfindung wie sie in den Ansprüchen beschrieben ist, liegt daher die Aufgabe zugrunde, die bekannten Rohrhalter zu verbessern und zwar auch so, dass sowohl das Aufschwimmen und Verwerfen des Rohrregisters mit Sicherheit vermieden wird, als auch die jeweiligen werkstoffgerechten Biegeradien bei der Fixierung der Rohre im Umlenkbereich, zu gewährleisten um Schädigungen des Rohres zu vermeiden.

Die mit der Erfindung erzielten Vorteile liegen insbesondere in der Anpassungsfähigkeit des erfindungsgemäß vorgeschlagenen Rohrhalters mit bogenförmig oder gerade ausgebildeten Aufnahmen für die Rohre an die Gegebenheiten der Rohrwerkstoffe und Rohrregister, wie beispielsweise die Aufnahme von zwei oder mehreren Rohren auch unterschiedlichen Durchmessers neben-, bzw. untereinander in einem Rohrhalter sowie einer einfacheren Montage der Rohre von oben in die vorfertigbaren Rohrhalter und Klemmschienen, werkstoffgerechter Biegeradien usw. . Es ist auch ein Nacharbeiten oder Justieren der Rohrregister bzw. Rohrhalter bei der Montage nicht mehr notwendig. Somit ist zusätzlich noch eine erhebliche Zeit- und Arbeitserspamis bei der Montage solcher komplettierter, d.h. vorgefertigter Rohrregister gegeben. Durch die ggf. flexible oder elastische Ausbildung der Rohraufnahme und/oder des Rohrhalters selbst ist weitere Vereinfachung beim Verlegen eines Rohrregisters oder dergl. gegeben.

Die Erfindung ist nachstehend anhand eines in den Abbildungen dargestellten Ausführungsbeispieles näher erläutert.

Es zeigt:
Fig. 1 einen Rohrhalter in Vorder- und Seitenansicht
Fig. 2 eine Ausführungsvariante der Fig. 1 und
Fig. 3 einen montierten Rohrhalter im Schnitt

Der in den Abbildungen dargestellte Rohrhalter 1 besteht im wesentlichen aus einem Schaft, einem Kopfteil mit einer von vorne zugänglichen bogenförmigen Aufnahme 1a für ein Rohr 2 und einem Fußteil mit einem rückseitigen Fortsatz 1c zum Abstützen auf einer Unterlage 3, beispielsweise Wand, Boden, einer Platte oder dergl., wobei der Radius des Kopfteiles mit seiner bogenförmigen Aufnahme 1a bzw. 1b jeweils dem zulässigen Biegeradius des einzusetzenden Rohrwerkstoffes entspricht. Die Aufnahme 1a bzw. 1b begleitet dabei den bogenförmigen Abschnitt des Rohres 2 bzw. 6 auf einem so langen Bereich a-b soweit, dass ein Abknicken des Rohres im Radiusbereich verhindert ist. Auch bei derartigen Rohrhaltern mit geradlinigen Aufnahmen für gerade verlegte Rohrstrecken ist eine längere Ausbildung derselben von Vorteil, um einen festen Sitz des Rohres in der Aufnahme sicherzustellen. Beide Aufnahmen 1a und 1b sind so ausgebildet, dass die Rohre 2 bzw. 6 in diese eingeschnappt werden können, also über einen Bereich >D umfasst sind.

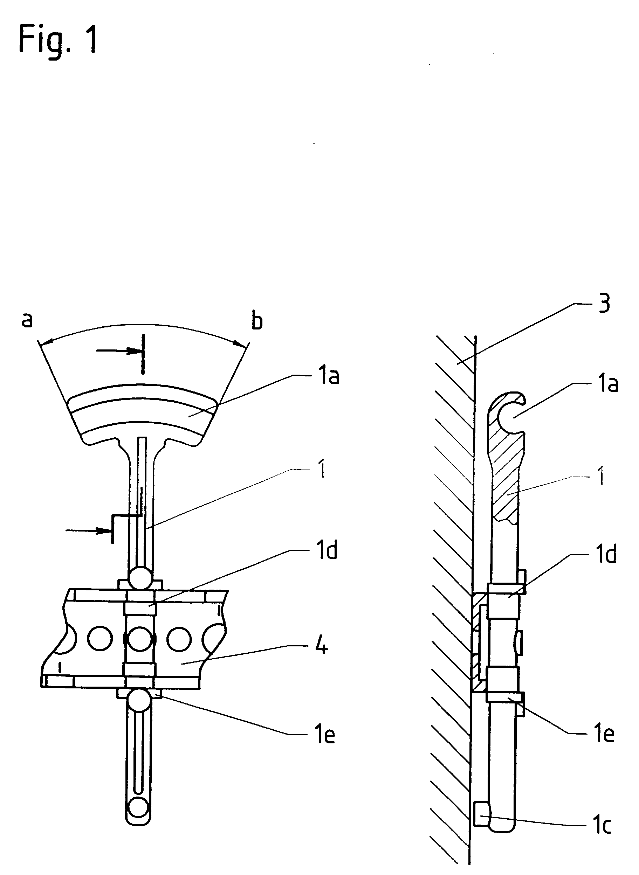

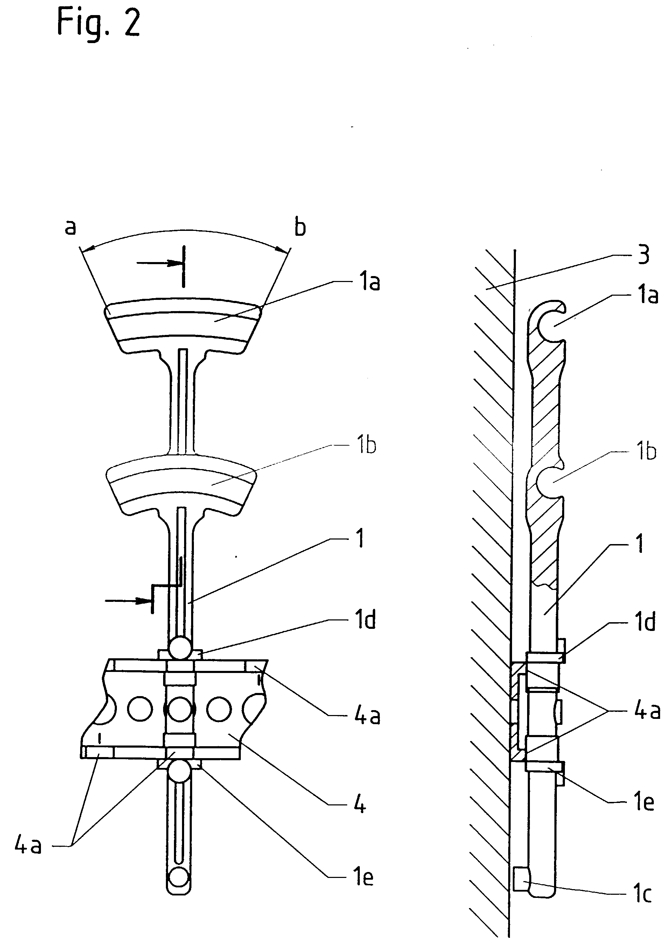

Die Fig. 1 zeigt einen solchen Rohrhalter 1 mit einem Kopfteil für ein Rohr 2 in der oberen Aufnahme 1a und Fig. 2 mit einem Kopfteil für eine weitere Aufnahme 1b für ein Rohr 6, welches einen anderen Durchmesser als das Rohr 2 aufweisen kann und dementsprechend auch andere Abmessungen für die Aufnahme 1b erfordert.

Das bzw. die Rohre 2,6 sind von oben in die Aufnahmen 1a, 1b einsetzbar, was eine erhebliche Montageerleichterung bedeutet und zusätzlich den Vorteil bietet, dass ganze Rohrregister vorgefertigt auf der Unterlage 3 verlegt werden können, wobei die Rohrhalter 1 in zugeordnete Aussparungen 4a der Klemmschienen 4 eingesetzt und erst anschließend mit den Rohren 2,6 bestückt werden. Die Rohrhalter 1 stützen sich dabei auf der Unterlage 3 mittels ihrer rückwärtigen Fortsätze 1c bereits vor der Rohrmontage einwandfrei ab, so dass mit dem Einsetzen der Rohre die Montage des Rohrregisters oder dergl. abgeschlossen ist. Somit ist verhindert, dass die Rohrregister aufschwimmen können.

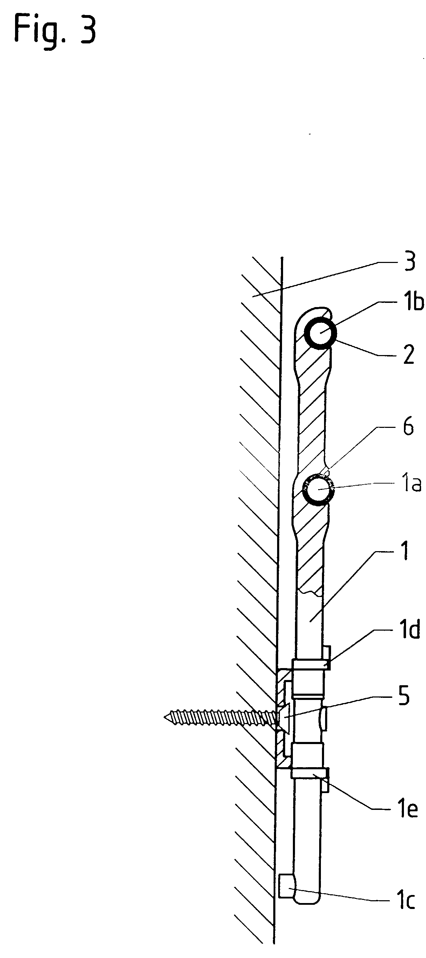

Die Fig. 3 zeigt einen fertig montierten Rohrhalter 1 mit zwei Rohren 2,6 unterschiedlichen Durchmessers, gehalten in einer Klemmschiene 4, die mit einer Schraube oder dergl. 5 an der Unterlage 3 befestigt ist. Dabei legen sich die beiden Anschläge 1d und 1e des Rohrhalters 1 jeweils vor die Aussparung der Klemmschiene und geben so demselben zusätzlich sicheren Halt und Schutz vor Verrutschen.

Ist der Rohrhalter 1, bzw. die Aufnahmen 1a und 1b in gewissem Umfang flexibel, plastisch oder elastisch ausgebildet, so kann derselbe an die sonst starre Rohrleitung, beispielsweise im Bogenbereich, insbesondere an Umlenkstellen bei mäanderartiger oder dergl. Verlegung der Rohre 2,6, auch an geradlinig verlaufenden Rohrabschnitten noch einfacher angepasst werden, indem sich die Aufnahme im Voraus gebogen oder auch völlig selbsttätig an die jeweilige Rohrgeometrie adaptiert, ohne deren Stabilität zu beeinträchtigen.

Selbstverständlich ist die Erfindung nicht auf die Anwendung bei Kunststoffrohrleitungen beschränkt, sie kann vielmehr überall dort mit Vorteil eingesetzt werden, wo Rohrleitungen, Kabel oder dergl. auf Unterlagen zu befestigen und in einer vorbestimmten Lage zu fixieren sind.

### Bezugszeichenliste

- 1: Rohrhalter
- 1a: Aufnahme für Rohr
- 1b: Aufnahme für Rohr
- 1c: Fortsatz
- 1d: Anschlag
- 1e: Anschlag
- 2: Rohr
- 3: Unterlage
- 4: Klemmschiene
- 4a: Aussparungen
- 5: Schraube oder dergl.
- 6: Rohr

## Patentansprüche

1. Rohrhalter für Rohrregister oder dergl., die spiral-, mäander- oder kreisförmig auf einer Unterlage befestigt sind die das festzulegende Rohr in seinem muldenförmigen Kopfteil aufnimmt und in seiner Lage fixiert, wobei es sich auf der Unterlage abstützt, **dadurch gekennzeichnet,** dass an dem etwa stabförmigen Rohrhalter (1) mindestens eine bogenförmig oder geradlinig verlaufende Aufnahme (1a) im Kopfteil vorgesehen ist, welches das Rohr (2) von unten über einen Abschnitt (a-b) umfasst und das Fußteil einen rückseitigen Fortsatz (1c) zum Abstützen auf der Unterlage aufweist.

2. Rohrhalter nach Anspruch 1, **dadurch gekennzeichnet,** dass am Rohrhalter (1) zwei oder mehrere untereinanderliegende Kopfteile (1a,1b) vorgesehen sind.

3. Rohrhalter nach Anspruch 1 und 2, **dadurch gekennzeichnet,** dass der Mittelabschnitt (1d) des Rohrhalters in den Ausschnitten (4a) einer Rohrklemmschiene (4) verrastet ist.

4. Rohrhalter nach Anspruch 1 bis 3, **dadurch gekennzeichnet,** dass der Radius der bogenförmigen Aufnahme (1a) dem zulässigen Biegeradius des jeweiligen Rohrwerkstoffes entspricht.

5. Rohrhalter nach Anspruch 1 bis 4, **dadurch gekennzeichnet,** dass der Rohrhalter (1) flexibel, plastisch oder elastisch ausgebildet ist.

6. Rohrhalter nach Anspruch 1 bis 5, **dadurch gekennzeichnet**, dass die Aufnahme (1a, 1b) flexibel, plastisch oder elastisch ausgebildet ist.
